# EUROPEAN PATENT APPLICATION

(11) **EP 4 361 696 A1**
(43) Date of publication of application: **01.05.2024**
(21) Application number: 21946724.8
(22) Date of filing: 16.09.2021
(51) Int. Cl.: G02B 6/50

(54) **CLAMPING SLOT FOR WIRING IN BUILDING, AND METHOD FOR USING SAME**

(30) Priority: 24.06.2021 CN 202110701891
(71) Applicant: Fiberhome Telecommunication Technologies Co., Ltd, Wuhan, Hubei 430000 (CN)
(72) Inventor: LIAO, Weizhang, Wuhan, Hubei 430000 (CN); CHEN, Cheng, Wuhan, Hubei 430000 (CN); ZHANG, Fan, Wuhan, Hubei 430000 (CN); ZHANG, Guangming, Wuhan, Hubei 430000 (CN); BAI, Wenjie, Wuhan, Hubei 430000 (CN); FU, Jingyi, Wuhan, Hubei 430000 (CN)
(74) Representative: Lohmanns Lohmanns & Partner mbB
(86) International application number: PCT/CN2021/118699
(87) International publication number: WO 2022/267240

(57) **Abstract**

A clamping slot (100) for wiring in a building, and a method for using same. The clamping slot (100) comprises: a base plate (1), which is configured to be fixed on a wall; and two side walls (2), the two side walls (2) being respectively connected to two opposite sides of the base plate (1), and the two side walls (2) extending, toward the same side, from joints between the two side walls (2) and the base plate (1), such that the two side walls (2) and the base plate (1) together enclose a slot channel (3) for accommodating an optical cable (5), wherein the slot channel (3) extends in the lengthwise direction of the base plate (1). An opening (4) in the lengthwise direction of the base plate (1) is further formed between the two side walls (2), and the opening (4) is used to allow the optical cable (5) to enter the slot channel (3); and at least one section of each side wall (2) is provided with a plurality of gaps (22) such that the clamping slot (100) forms a bendable portion (11), wherein the gaps (22) penetrate the side walls (2) in the width direction of the base plate (1), and the gaps (22) penetrate the side walls (2) in the height direction of the base plate (1). The clamping slot (100) can protect the optical cable (5), such that the optical cable (5) is prevented from being excessively bent, and the stress formed by the clamping slot (100) in the process of bending is reduced.

## Description

### Field of the Invention

The present invention relates to the technical field of optical cable construction, in particular to a clamping slot for wiring in a building, and a method for using same.

### Background of the Invention

At present, the networking methods of network cable and WIFI have the problems of substandard speed and large signal attenuation, which cannot meet the application requirements of gigabit bandwidth in the future. Fiber to the room (FTTR) can solve all the above problems well.

In related technologies, for buildings or rooms with hidden pipes, the way of laying optical cables through the hidden pipes is preferred. In this way, the routing of the optical cables depends heavily on the distribution of the hidden pipes. In addition, for the hidden pipes that already have laid weak wires such as network cables, the optical cables may not be able to penetrate. When the hidden pipes cannot meet the requirements for the optical cable laying, the method of open-wire laying can be used. The conventional open-wire laying is mostly fixed on the wall surface with wall nails, which lacks basic protection for the optical cables, especially at the portions such as the corner of the wall surface, easily causes excessive bending of the optical cables, increases attenuation, and even affects the service life.

Therefore, it is necessary to design a new clamping slot for wiring in a building to overcome the above problems.

### Summary of the Invention

The embodiment of the present invention provides a clamping slot for wiring in a building, and a method for using same to solve the problems of excessive bending of the optical cables and increased attenuation in the related art due to the fact that the routing of optical cables depends on the distribution of hidden pipes, and the optical cables may not be able to penetrate, and the use of wall nails makes the optical cables lack of protection.

In a first aspect, a clamping slot for wiring in a building is provided, comprising: a base plate, which is configured to be fixed on a wall surface; two side walls, which are respectively connected to two opposite sides of the base plate, and the two side walls extend toward the same side from joints between the two side walls and the base plate, so that the two side walls and the base plate together enclose a slot channel configured to receive an optical cable, wherein the slot channel extends along a lengthwise direction of the base plate; an opening along the length direction of the base plate is further formed between the two side walls, and the opening is configured to allow the optical cable to enter the slot channel; and at least one section of each side wall is provided with a plurality of gaps so that the clamping slot forms a bendable portion, wherein the gaps penetrate the side walls along a width direction of the base plate, and the gaps penetrate the side walls along a height direction of the base plate.

In some embodiments, the gaps on the two side walls are distributed in an alternating manner.

In some embodiments, the gaps penetrate the base plate along the height direction of the base plate.

In some embodiments, the sizes of the gaps gradually increase from the base plate toward the opening.

In some embodiments, a tensile element is embedded in the base plate or each side wall, and the tensile element extends along the lengthwise direction of the base plate.

In some embodiments, the two side walls extend in an oblique manner toward each other from the joints between the two side walls and the base plate, so that when the optical cable is installed in the slot channel, the two side walls and the base plate form a three-point support for the optical cable.

In some embodiments, the two side walls extend along a straight line in an oblique manner, so that a cross section of the slot channel is trapezoidal in shape.

In some embodiments, the two side walls extend along a curve line in a bent manner, so that the cross section of each side wall is arc-shaped, and a radius of an inner wall surface of each side wall is larger than that of an inscribed circle of the slot channel.

In some embodiments, a bottom surface of the base plate is flat, and the base plate is fixedly provided with a colloid, so that the base plate is pasted on the wall surface through the colloid.

In a second aspect, a method for using the above-mentioned clamping slot, comprising the following steps: adopting a first auxiliary tool to press the clamping slot, fixing the clamping slot on the wall surface, and at the same time, making the bendable portion correspondingly located at a corner of the wall surface; and placing the optical cable in the opening, and adopting the first auxiliary tool to press the optical cable so as to make the optical cable enter the slot channel.

In some embodiments, the first auxiliary tool comprises a handle and a roller mounted on one end of the handle by means of a pin shaft, the roller is provided with a groove configured to receive the clamping slot, and the size of the groove is matched with that of the clamping slot.

In some embodiments, before the steps of adopting the first auxiliary tool to press the clamping slot, fixing the clamping slot on the wall surface, and at the same time, making the bendable portion correspondingly located at the corner of the wall surface, further comprising the following step: adopting a second auxiliary tool to cut on the clamping slot to form the gaps.

In some embodiments, the second auxiliary tool comprises: a first operating arm and a second operating arm hinged by means of a pin shaft, the first operating arm is fixedly provided with a positioning seat, the second operating arm is fixedly provided with cutter knives arranged at intervals corresponding to the positioning seat, and the cutter knives are configured to cut the gaps.

In some embodiments, the positioning seat is provided with a positioning portion corresponding to each cutter knife, and the step of adopting the second auxiliary tool to cut on the clamping slot to form the gaps comprises the following steps: placing the clamping slot upside down on the positioning seat so as to make the slot channel clamped on the positioning portion, driving the first operating arm and the second operating arm to move toward each other, and driving the cutter knives to move toward the clamping slot so as to make the cutter knives to cut on the clamping slot to form the gaps.

In some embodiments, the positioning seat is provided with a guide groove, the second operating arm is correspondingly provided with a guide post matched with the guide groove, and a spring is sleeved outside the guide post, and an outer diameter of the spring is larger than an inner diameter of the guide groove.

The beneficial effects of the technical solution provided in the present invention comprise:
The embodiment of the present invention provides a clamping slot for wiring in a building, and a method for using same, since the base plate and the side walls can form a longitudinal slot channel, the optical cables can be fixed in the slot channel to protect the optical cables, and the base plate can be fixed on the wall surface, there is no need to use hidden pipes to lay the optical cables, avoiding the situation that optical cables cannot pass through, and since the clamping slot is provided with a bendable portion, the bendable portion can be installed in corners such as the corner of the wall surface, and the bendable portion can be recessed into the corner of the wall surface to make a smooth transition between two walls, the optical cables can be installed in the corner of the wall surface through the bendable portion, avoiding excessive bending of the optical cables, at the same time, due to the gaps on each side wall, the stress formed by the clamping slot during the process of bending is reduced, so that the clamping slot maintains a smooth arc at the corner, reducing the risk of the clamping slot being separated from the wall body, and also playing a role in protecting the optical cables at the corner.

### Brief Description of the Drawings

In order to better illustrate the technical solution in the embodiments of the present application, the following will briefly introduce the drawings needed in the description of the embodiments, and it is obvious that the drawings in the following description are only a part of embodiments of the present application, for those of ordinary skill in the art, other drawings may also be obtained based on these drawings without any inventive effort.
Fig. 1 is a structural diagram of a clamping slot for wiring in a building in the embodiment of the present invention;
Fig. 2 is a partial structural diagram of the first type of clamping slot for wiring in a building in the embodiment of the present invention;
Fig. 3 is a partial structural diagram of the second type of clamping slot for wiring in a building in the embodiment of the present invention;
Fig. 4 is a partial structural diagram of the third type of clamping slot for wiring in a building in the embodiment of the present invention;
Fig. 5 is a structural diagram of a tensile element arranged in a clamping slot for wiring in a building in the embodiment of the present invention;
Fig. 6 is a structural diagram of a clamping slot attaching colloid for wiring in a building in the embodiment of the present invention;
Fig. 7 is a structural diagram of a clamping slot for wiring in a building provided with a protective cover in the embodiment of the present invention;
Fig. 8 is a structural diagram of the first auxiliary tool in the embodiment of the present invention;
Fig. 9 is a three-dimensional structural diagram of the second auxiliary tool in the embodiment of the present invention;
Fig. 10 is a structural diagram of placing the clamping slot on the second auxiliary tool in the embodiment of the present invention;
Fig. 11 is a main view of the second auxiliary tool in the embodiment of the present invention.

In the figures:
100-clamping slot; 1-base plate; 11-bendable portion;
2-side wall; 21-protective tooth; 22-gap;
3-slot channel; 4-opening; 5-optical cable; 6-colloid; 7-release film; 8-tensile element; 9-protective cap;
200-the first auxiliary tool; 201-handle; 202-roller; 203-groove;
300-the second auxiliary tool; 301-the first operating arm; 302-the second operating arm; 303-positioning seat; 304-positioning portion; 305-cutter knife; 306-fixed seat; 307-guide groove; 308-guide post; 309-spring.

### Detailed Description of the Embodiments

In order to make the purpose, technical solutions and advantages of the embodiments of the present invention clearer, the technical solutions in the embodiments of the present invention will be described clearly and completely in combination with the drawings in the embodiments of the present invention. Obviously, the described embodiments are only a part of the embodiments of the present invention, not all of the embodiments. Based on the embodiments in the present invention, all other embodiments obtained by a person of ordinary skill in the art without inventive efforts shall fall within the protection scope of the present invention.

The embodiment of the present invention provides a clamping slot for wiring in a building, and a method for using same, which can solve the problems of excessive bending of the optical cables and increased attenuation in the related art due to the fact that the routing of optical cables depends on the distribution of hidden pipes, and the optical cables may not be able to penetrate, and the use of wall nails makes the optical cable lack of protection.

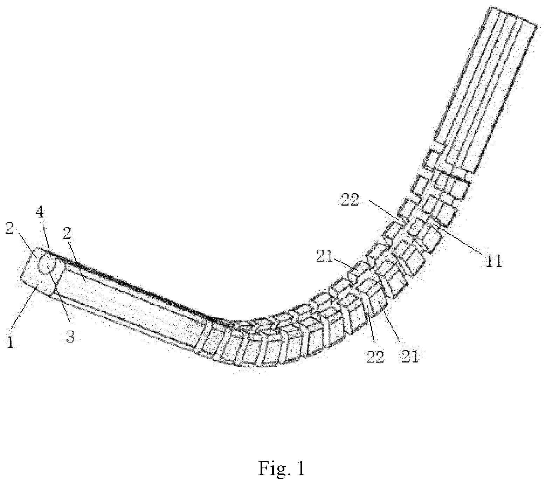

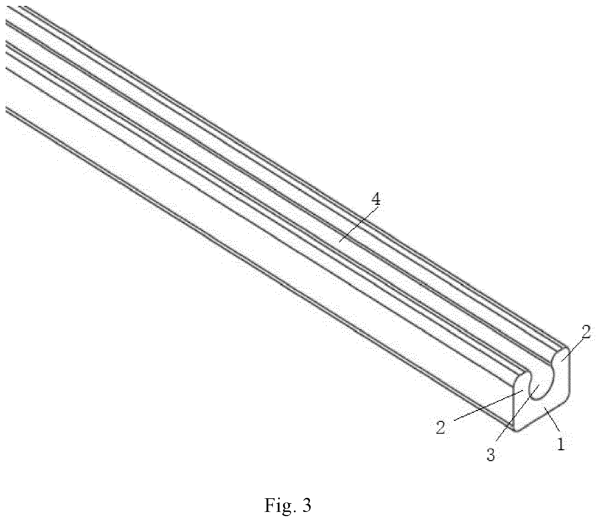

As shown in Fig. 1 to Fig. 4, the embodiment of the present invention provides a clamping slot 100 for wiring in a building, which can comprise: a base plate 1, which can be configured to be fixed on a wall surface. In this embodiment, the base plate 1 can be flat or curved. The clamping slot 100 can also comprise two side walls 2, which are respectively connected to two opposite sides of the base plate 1, that is to say, one side wall 2 is arranged on one side of the base plate 1, and the other side wall 2 is arranged on the other side of the base plate 1, and each side wall 2 is arranged along the lengthwise direction of the base plate 1. The base plate 1 can be integrally formed with the side walls 2, or can be formed separately from the side walls 2. In this embodiment, the base plate 1 and the side walls 2 adopt materials that are transparent, translucent, white or consistent with the background color of the interior decoration, such as PVC, TPU, LSZH, PE and other materials, these types of materials have moderate hardness, which can not only be well adapted to various corner scenes of indoor wiring, but also has a certain degree of support, and plays a good role in protecting optical cables 5. Moreover, these types of materials can form the clamping slot 100 by means of injection molding, extrusion molding or other molding methods, so that the clamping slot 100 has the characteristics of small size, beautiful appearance, and invisible, and the length of the clamping slot 100 can be customized according to user requirements. At the same time, the two side walls 2 can extend toward the same side from joints between the two side walls 2 and the base plate 1, so that the two side walls 2 and the base plate 1 together enclose a slot channel 3 configured to receive the optical cable 5. The slot channel 3 extends along the lengthwise direction of the base plate 1, the cross section of the slot channel 3 can be various shapes such as circular, trapezoidal, arc, etc. as long as the slot channel 3 can fix the optical cable 5. An opening 4 along the lengthwise direction of the base plate 1 is further formed between the two side walls 2, and the opening 4 is configured to allow the optical cable 5 to enter the slot channel 3, and through setting the opening 4 along the lengthwise direction, the optical cable 5 can be installed into the slot channel 3 bit by bit along the lengthwise direction of the base plate 1. In this embodiment, the width of the opening 4 is preferably one-third to two-thirds of the diameter of the inscribed circle of the slot channel 3, so that the optical cable 5 can be easily pressed into the slot channel 3 through applying an external force, and make the slot channel 3 have a certain locking effect, so that the optical cable 5 is not easy to escape from the slot channel 3. At the same time, the optical cable 5 is received in the slot channel 3, and the side walls 2 on both sides can protect the optical cable 5. In this embodiment, the two side walls 2 can be provided with arc surfaces at the opening 4, so that the optical cable 5 can smoothly enter the slot channel 3 without being damaged. At least one section of the side wall 2 can be provided with a plurality of gaps 22 so that the clamping slot 100 forms a bendable portion 11, that is to say, a certain section in the middle or a certain section at the end of each side wall 2 can be provided with the plurality of the gaps 22 to form the bendable portion 11. The bendable portion 11 can realize bending so as to be installed at the corner of the wall surface and smoothly transition between two walls. At the same time, the bendable portion 11 is also provided with the slot channel 3, the corresponding portion of the optical cable 5 can be installed in the slot groove 3 corresponding to the bendable portion 11, and when the optical cable 5 passes through the bendable portion 11, the optical cable 5 can extend from one side of the corner to the other through the bendable portion 11, so as to avoid excessive bending of the optical cable 5 at the corner. The gap 22 can penetrate the side wall 2 along the width direction of the base plate 1, and the gap 22 can penetrate the side wall 2 along the height direction of the base plate 1, that is to say, the side wall 2 is cut off on opposite sides of the gap 22, so that the side walls 2 on both sides of the gap 22 are arranged at intervals. During the process of bending the side walls 2 at the bendable portion 11, a slight movement can be performed to adapt to the curvature of the bend, which reduces the stress formed on the side walls 2 during the process of bending, makes the clamping slot 100 maintain a smooth arc at the corner, reduces the risk of the clamping slot 100 detaching from the wall body, and also plays a role in protecting the optical cable 5 at the corner. In this embodiment, the gaps 22 can be integrally formed by injection molding, or can be formed by cutting with a cutting tool.

As shown in Fig. 1, in some embodiments, the gaps 22 on the two side walls 2 are distributed in an alternating manner, that is to say, along the transverse direction (that is, the width direction) of the base plate 1, the gaps 22 on one of the side walls 2 are alternately distributed with the gaps 22 on the other side wall 2, the gaps 22 on the two side walls 2 are not in one-to-one correspondence, but are arranged in a dislocation manner. Through setting the gaps 22 distributed in an alternating manner, it is beneficial to retain the tensile strength of the clamping slot 100.

As shown in Fig. 1, in some optional embodiments, the gaps 22 penetrate the base plate 1 along the height direction of the base plate 1, that is to say, the gaps 22 penetrate the base plate 1 in the up-down direction, so that the clamping slot 100 completely penetrates the gaps 22, reducing the width of the base plate 1 at the bendable portion 1, the flexibility of the base plate 1 is better at this position, further reducing the binding of the bendable portion 11 at the corner, and being beneficial for the bendable portion 11 to maintain a smooth arc at the corner.

As shown in Fig. 1, further, the sizes of the gaps 22 can gradually increase from the base plate 1 toward the opening 4, that is to say, along the height direction of the base plate 1, the sizes of the gaps 22 on the side close to the base plate 1 are smaller, and the sizes of the gaps 22 on the side away from the base plate 1 are larger, and the side wall 2 between two adjacent gaps 22 can be defined as a protective tooth 21, the setting like which makes the shape of the protective tooth 21 also present an irregular state, that is to say, the width of the protection tooth 21 close to the base plate 1 is wider, while the width away from the side of the base plate 1 is narrower, which ensures that the root position of the protective tooth 21 is connected stably with the base plate 1 and has good strength, and the protective tooth 21 on the side close to the opening 4 has a large moving space. In this embodiment, the cross-sectional shape of each gap 22 along the lengthwise direction of the base plate 1 is trapezoidal, and can also be triangular in other embodiments.

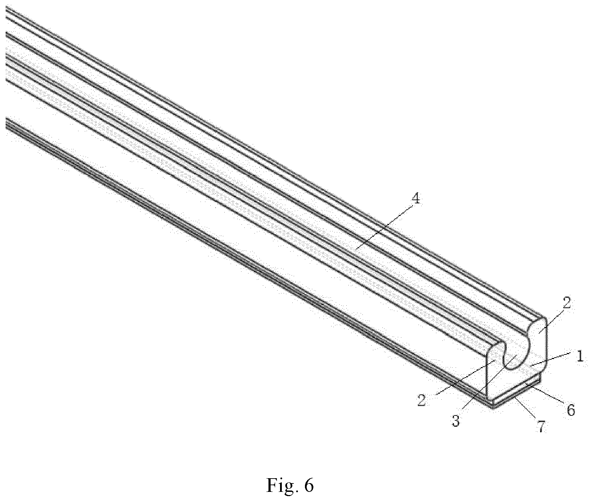

As shown in Fig. 6, in some embodiments, the bottom surface of the base plate 1 is flat, and the base plate 1 can be fixedly provided with a colloid 6, so that the base plate 1 is pasted on the wall surface through the colloid 6. The colloid 6 can be firmly pasted on wall surfaces made of ceramic tiles, lime walls, wood boards, etc., without damaging the original wall body, so that the clamping slot 100 can be attached and used immediately, and the construction is fast and easy, without professional skills. In this embodiment, the colloid 6 can be a double-sided adhesive or an adhesive, and one side of the pressure-sensitive double-sided adhesive can be pasted on the base plate 1 in the factory, and the other side can be kept covered by a release film 7. When the clamping slot 100 needs to be pasted on the wall surface, the release film 7 is torn off, and the pressure-sensitive double-sided adhesive substrate can be rubber, acrylic acid or silicone materials; or the adhesive can also be applied to the base plate 1 at the construction site, and then the base plate 1 is in contact with the wall surface, after the adhesive is cured, the base plate 1 is fixed to the wall surface. The adhesive can be heat cured adhesive, or cured by moisture, radiation, or simply back air cured adhesive.

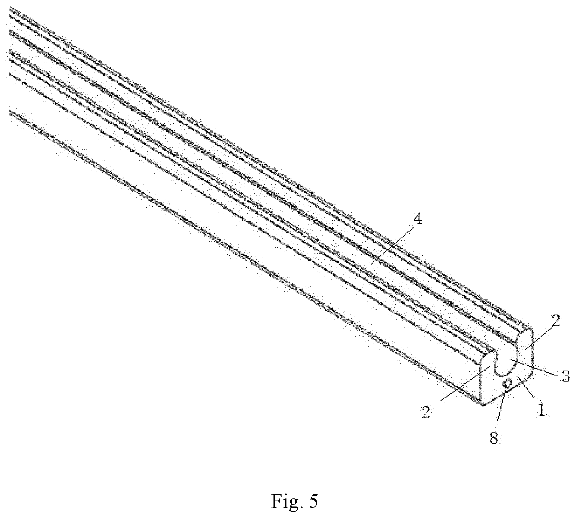

As shown in Fig. 5, in some optional embodiments, a tensile element 8 can be embedded in the base plate 1 or the side wall 2. The tensile element 8 can extend along the lengthwise direction of the base plate 1, and one tensile element 8 can be arranged in the middle of the base plate 1, or two or more tensile elements 8 can be symmetrically arranged on the base plate 1, or one or more tensile elements 8 can be embedded in the two side walls 2, or the tensile element 8 can be embedded in the base plate 1 and the side wall 2 at the same time, so as to enhance the overall tensile capacity of the clamping slot 100. The tensile element 8 can be made of glass fiber reinforced plastic rod or aramid etc.

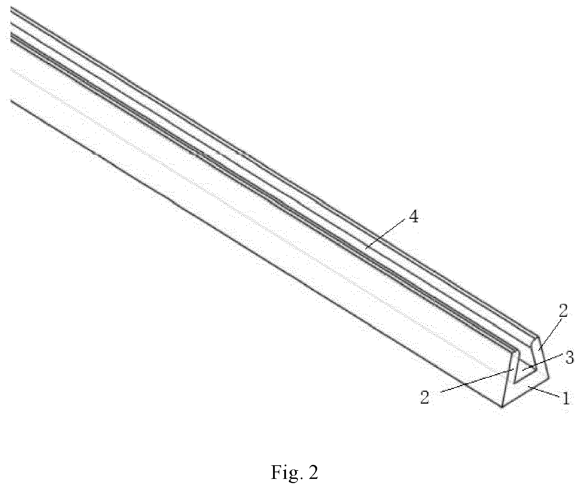

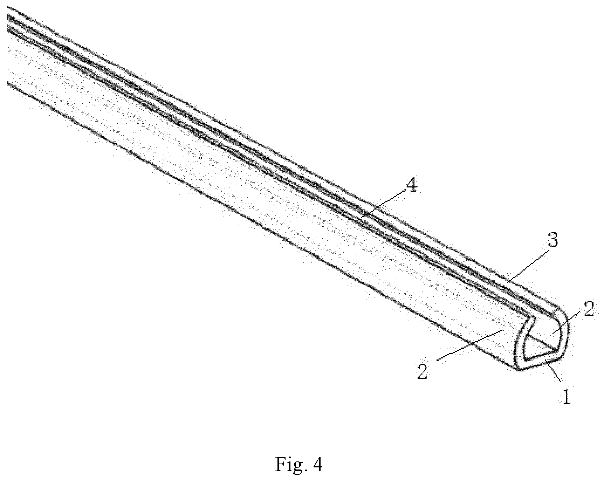

As shown in Fig. 2 and Fig. 4, in some embodiments, the two side walls 2 extend in an oblique manner toward each other from the joints between the two side walls 2 and the base plate 1, that is to say, the two side walls 2 can extend along a straight line in an oblique manner, or extend along a curve line in a bent manner, and when the two side walls 2 extend along the straight line in an oblique manner, the cross section of the slot channel 3 surrounded by the two side walls 2 and the base plate 1 is trapezoidal. In this embodiment, the structures of the two side walls 2 are the same, so that the cross section of the slot channel 3 is preferably an isosceles trapezoid, while in other embodiments, the structures of the two side walls 2 can also be different, that is, the inclination angles of the two side walls 2 relative to the base plate 1 can be different, so that the cross section of the slot channel 3 is non-isosceles trapezoidal. When the two side walls 2 extend along the curve line in a bent manner, the cross-sections of the two side walls 2 are arc-shaped, that is to say, the slot channel 3 is surrounded by the straight base plate 1 and the arc-shaped side walls 2 connecting the opposite sides of the base plate 1, and the radius of the inner wall surface of the side wall 2 can be greater than that of the inscribed circle of the slot channel 3, that is to say, the radius of the inner wall surface of the side wall 2 is greater than that of the optical cable 5, so that after the optical cable 5 is installed in the slot channel 3, the cross-sectional dimension of the slot channel 3 is greater than that of the optical cable 5. When the optical cable 5 is installed in the slot channel 3, the two side walls 2 and the base plate 1 will be in contact with the optical cable 5, and the two side walls 2 and the base plate 1 form a three-point support for the optical cable 5, stably fixing the optical cable 5 in the slot channel 3, and a gap is formed between the inner wall of the slot channel 3 and the optical cable 5, so that the optical cable 5 has a certain deformation space during use. In other embodiments, the cross-section of the slot channel 3 can also be circular, and the cross-sectional dimension of the slot channel 3 is approximately the same as that of the optical cable 5, so that after the optical cable 5 is installed in the slot channel 3, the inner wall surface of the slot channel 3 is almost completely attached to the optical cable 5, so that the optical cable 5 and the clamping slot 100 become integrated, thereby improving the stability of the optical cable 5.

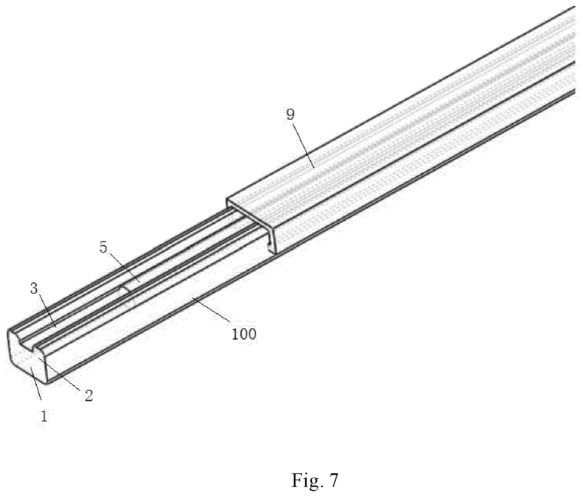

As shown in Fig. 7, in order to further strengthen the protection of the optical cable 5, the clamping slot 100 can comprise a protective cover 9 covering the side wall 2 to seal the opening 4. The raw material of the protective cover 9 can be selected from the raw material of the base plate 1 or the side wall 2, the outer side of the side wall 2 can be provided with a convex block, and the inner side of the protective cover 9 can be provided with a concave part matched with the convex block, or the concave part can be set on the side wall 2, and the convex block is set on the protective cover 9, so that the protective cover 9 and the side wall 2 can be fixed through matching the convex block with the concave part. In other embodiments, other types of fastener apparatus can also be provided on the protective cover 9 and the side wall 2 for locking.

The embodiment of the present invention further provides a method for using the above-mentioned clamping slot 100, which can comprise the following steps.

S1: A first auxiliary tool 200 is adopted to press the clamping slot 100, the clamping slot 100 is fixed on the wall surface, and at the same time, the bendable portion 11 is correspondingly located at a corner of the wall surface.

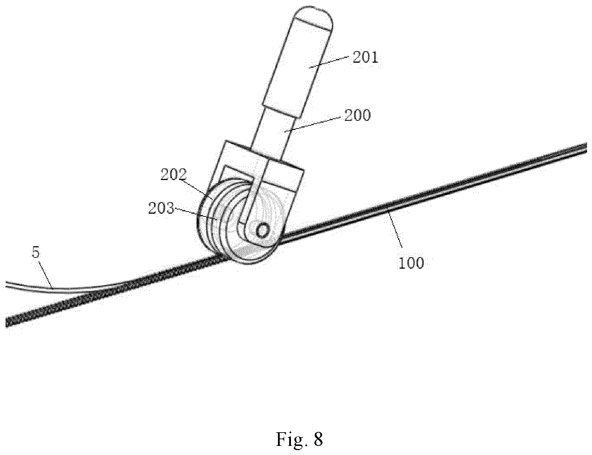

As shown in Fig. 8, in some embodiments, before the steps of adopting the first auxiliary tool 200 to press the clamping slot 100, fixing the clamping slot 100 on the wall surface, and at the same time, making the bendable portion 11 correspondingly located at the corner of the wall surface, further comprising step of adopting a second auxiliary tool 300 to cut on the clamping slot 100 to form the gaps 22, that is to say, the base plate 1 and the side walls 2 are formed first, and then the second auxiliary tool 300 is adopted to cut on the side walls 2 to form the gaps 22. In other embodiments, the gaps 22 can also be formed together when the side walls 2 are formed.

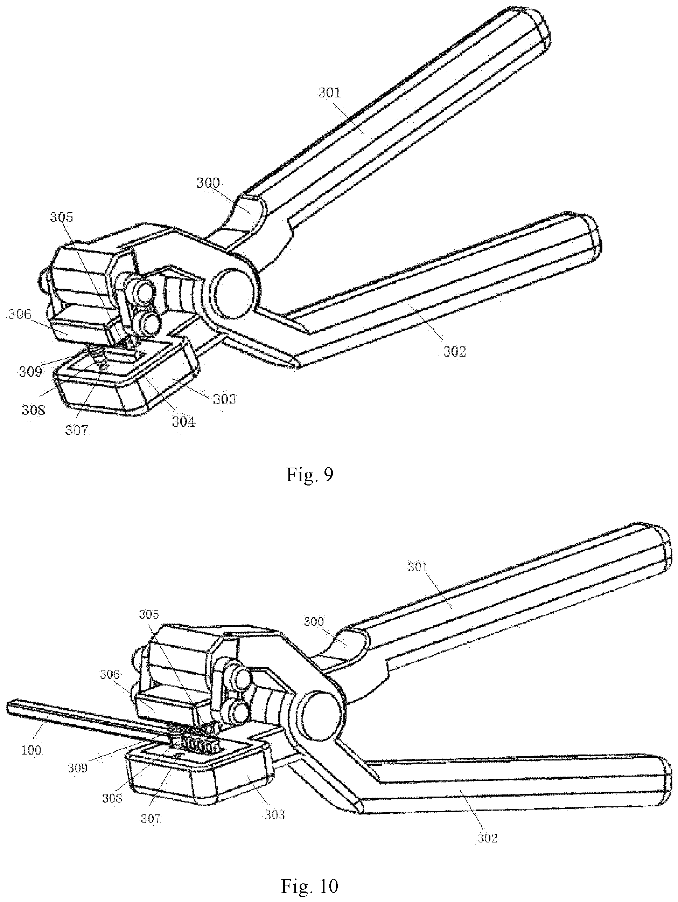

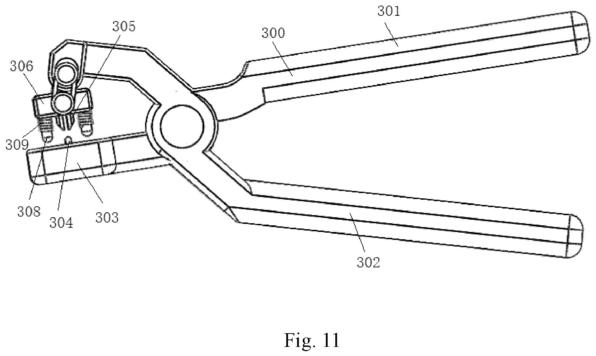

As shown in Figs. 9 to 11, in some optional embodiments, the second auxiliary tool 300 can comprise: a first operating arm 301 and a second operating arm 302 arranged crosswise, and the first operating arm 301 and the second operating arm 302 are hinged by means of a pin shaft, so that the first operating arm 301 can rotate relative to the second operating arm 302. The first operating arm 301 can be fixedly provided with a positioning seat 303. In this embodiment, the positioning seat 303 is arranged at one end of the first operating arm 301, and the second operating arm 302 can be fixedly provided with cutter knives 305 arranged at intervals corresponding to the positioning seat 303, and the cutter knives 305 are configured to cut the gaps 22. Specifically, one end of the second operating arm 302 is fixedly provided with a fixing seat 306, the cutter knife 305 is installed at the middle position of the fixing seat 306, and the positioning seat 303 is provided with a positioning portion 304 corresponding to the position of each cutter knife 305. In this embodiment, the positioning portion 304 is a convex block protruding from the upper surface of the positioning seat 303, and the convex block can be matched with the slot channel 3 on the clamping slot 100, so that when the clamping slot 100 is placed upside down the positioning portion 304, the slot channel 3 can be clamped on the positioning portion 304, and then the positioning portion 304 can position the clamping slot 100. The cutter knifes 305 can cut and form the gaps 22 from the bottom surface of the clamping slot 100, avoiding pulling the side wall 2 and damaging the side wall 2 when cutting to form the gaps 22. In other embodiments, the positioning portion 304 can also be a groove-shaped structure, so that the clamping slot 100 can be inserted into the positioning portion 304, and the positioning portion 304 can perform positioning on the clamping slot 100. The positioning seat 303 can also be provided with a cutter groove corresponding to each of the cutter knives 305, so that the cutter knife 305 can enter the cutter groove when performing cutting, thereby cutting on the clamping slot 100 to form the gaps 22. In this embodiment, two rows of the cutter knives 305 can be fixed on the fixing seat 306. The step of using the second auxiliary tool 300 to cut on the clamping slot 100 to form the gaps 22 specifically comprises: through placing the clamping slot 100 on the positioning seat 303, the first operating arm 301 and the second operating arm 302 are held by hand to drive the first operating arm 301 and the second operating arm 302 to move toward each other and drive the cutter knife 305 to move towards the direction close to the clamping slot 100, so that the cutter knife 305 can cut on the clamping slot 100 to form a row of the gaps 22, the operation is convenient, and the gaps 22 are evenly distributed.

As shown in Figs. 9 to 11, further, the positioning seat 303 can be provided with guide grooves 307 on the opposite sides of the positioning portion 304, the position corresponding to the guide groove 307 on the fixing seat 306 can be provided with a guide post 308 matched with the guide groove 307, and in the process of cutting to form the gaps 22, the guide post 308 enters the guide groove 307 to guide the fixing seat 306, so as to avoid the position movement of the cutter knife 305 caused by the offset of the fixing seat 306, so that the shape and position of the gaps 22 are not accurate enough. In this embodiment, a spring 309 can be further sleeved outside the guide post 308, and the outer diameter of the spring 309 can be larger than an inner diameter of the guide groove 307, so that after the guide post 308 moves into the guide groove 307, the spring 309 is blocked outside the guide groove 307, and the spring 309 is in a compressed state, after the first operating arm 301 and the second operating arm 302 are released, under the elastic force of the spring 309, the first operating arm 301 and the second operating arm 302 can be separated and restored to their original shape so as to realize automatic reset.

As shown in Fig. 8, in some embodiments, the first auxiliary tool 200 can comprise a handle 201 to facilitate hand-held construction. In this embodiment, the handle 201 is preferably cylindrical. In other embodiments, the cross section of the handle 201 can be square, rectangular or rhombus. The first auxiliary tool 200 can further comprise a roller 202 mounted on one end of the handle 201 by means of a pin shaft, so that the roller 202 can rotate relative to the handle 201. The roller 202 is provided with a groove 203 for receiving the clamping slot 100, the size of the groove 203 is matched with that of the clamping slot 100, and when using, the bottom of the clamping slot 100 is facing the wall surface, and the first auxiliary tool 200 is provided to press on the outside of the clamping slot 100, and the clamping slot 100 is pressed on the wall surface through applying a certain force, so that the laying process of the clamping slot 100 in the building is more convenient. The first auxiliary tool 200 can assist the construction personnel to fix the clamping slot 100 straight on the wall surface, so that the routing of the card slot 100 is more beautiful, and a certain pressure can be provided at the same time, so that the bonding between the clamping slot 100 and the wall surface is firmer.

S2: The optical cable 5 is placed in the opening 4, and the first auxiliary tool 200 is adopted to press the optical cable 5 so as to make the optical cable 5 enter the slot channel 3.

In step 2, when the optical cable 5 is installed in the slot channel 3, start from one end of the optical cable 5, the optical cable 5 is arranged facing the opening 4, and then the first auxiliary tool 200 is adopted to press the optical cable 5 to the surface of the optical cable 5, so that the clamping slot 100 enters the groove 203 of the first auxiliary tool 200. At the same time, the inner wall of the groove 203 exerts a certain force on the optical cable 5, so that the optical cable 5 enters the slot channel 3 from the opening 4, and the optical cable 5 is routed along the clamping slot 100 and is fixed in the slot channel 3 of the clamping slot 100 by pressing. Through using the same first auxiliary tool 200, both the arrangement of the clamping slot 100 and the laying of the optical cable 5 are accelerated. Since the roller 202 is circular and can also be perfectly matched with the clamping slot 100 at the corner of the wall surface, and the optical cable 5 is pressed into the slot channel 3 corresponding to the bendable portion 11. The sheath material of the optical cable 5 can also be transparent, translucent or white, such as PVC, TPU, LSZH, PE and other materials. Combined with the miniaturized design of the optical cable 5, the optical cable 5 itself has the characteristics of compactness, beauty and invisibility.

The principle of a clamping slot 100 for wiring in a building, and a method for using same provided by the embodiment of the present invention is as follows.

Since the base plate 1 and the side walls 2 can form a longitudinal slot channel 3, the optical cable 5 is fixed in the slot channel 3 of the clamping slot 100 along the path of the slot channel 3 by pressing, that is, the indoor wiring of the optical cable 5 is completed, the optical cable 5 is protected, and the reliable transmission of signals is ensured. At the same time, with the specially designed invisible optical cable 5, invisible wiring can be realized, and the base plate 1 can be fixed on the wall surface, without the use of hidden pipes to lay the optical cable 5, which avoids the situation that the optical cable 5 cannot pass through. Since the clamping slot 100 is provided with the bendable portion 11, the bendable portion 11 can be bent into a certain arc, and the bendable portion 11 is also provided with the slot channel 3 correspondingly, the bendable portion 11 can be installed on the corners such the corner of the wall surface, the bendable portion 11 can be recessed into the corner of the wall surface to make a smooth transition between the two walls, and the optical cable 5 can be installed at the corner of the wall surface through the bendable portion 11, which avoids affecting the service life of the optical cable 5 due to excessive bending. At the same time, since the side wall 2 is provided with the gaps 22, the side wall 2 is avoided from being squeezed and deformed at the corner, and the stress formed in the bending process of the clamping slot 100 is reduced, so that the clamping slot 100 maintains a smooth arc at the corner, which reduces the risk of the clamping slot 100 detaching from the wall body, and also plays a role in protecting the optical cable 5 at the corner. The clamping slot 100 is made of moderately soft and hard materials, which can be well adapted to various corners such as indoor internal and external corners, and 90 ° corners on the same plane without cutting the clamping slot 100. At the same time, the clamping slot 100 has a certain degree of support and plays a protective role for the optical cable 5.

In the description of the present invention, it should be noted that the orientation or positional relationship indicated by the terms "upper", "lower", etc. are based on the orientation or positional relationship shown in the drawings, which is only for the convenience of describing the present invention and simplifying the description, instead of indicating or implying that the pointed device or element must have a specific orientation, be configured and operated in a specific orientation, therefore it may not be understood as a limitation of the present invention. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application may be understood according to specific circumstances.

It should be noted that relational terms such as "first" and "second" are only for distinguishing one entity or operation from another entity or operation in this the present invention, and do not necessarily require or imply any such actual relationship or order between these entities or operations. Moreover, the terms "comprise", "include" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present invention, so that those skilled in the art may understand or implement the present invention. For those skilled in the art, various modifications to these embodiments will be obvious, and the general principles defined herein may be implemented in other embodiments without departing from the spirit or scope of the present invention. Therefore, the present invention will not be limited to the embodiments shown in this document, but will be subject to the widest scope consistent with the principles and novel features applied herein.

## Claims

1. A clamping slot for wiring in a building, comprising:
a base plate (1), which is configured to be fixed on a wall surface;
two side walls (2), which are respectively connected to two opposite sides of the base plate (1), and the two side walls (2) extend toward the same side from joints between the two side walls (2) and the base plate (1), so that the two side walls (2) and the base plate (1) together enclose a slot channel (3) configured to receive an optical cable (5), wherein the slot channel (3) extends along a lengthwise direction of the base plate (1);
an opening (4) along the lengthwise direction of the base plate (1) is further formed between the two side walls (2), and the opening (4) is configured to allow the optical cable (5) to enter the slot channel (3); and
at least one section of each side wall (2) is provided with a plurality of gaps (22) so that the clamping slot (100) forms a bendable portion (11), wherein the gaps (22) penetrate the side walls (2) along a width direction of the base plate (1), and the gaps (22) penetrate the side walls (2) along a height direction of the base plate (1).

2. The clamping slot for wiring in the building according to claim 1, wherein the gaps (22) on the two side walls (2) are distributed in an alternating manner.

3. The clamping slot for wiring in the building according to claim 2, wherein the gaps (22) penetrate the base plate (1) along the height direction of the base plate (1).

4. The clamping slot for wiring in the building according to claim 2, wherein the sizes of the gaps (22) gradually increase from the base plate (1) toward the opening (4).

5. The clamping slot for wiring in the building according to claim 1, wherein
a tensile element (8) is embedded in the base plate (1) or each side wall (2), and the tensile element (8) extends along the lengthwise direction of the base plate (1).

6. The clamping slot for wiring in the building according to claim 1, wherein
the two side walls (2) extend in an oblique manner toward each other from the joints between the two side walls (2) and the base plate (1), so that when the optical cable (5) is installed in the slot channel (3), the two side walls (2) and the base plate (1) form a three-point support for the optical cable (5).

7. The clamping slot for wiring in the building according to claim 6, wherein
the two side walls (2) extend along a straight line in an oblique manner, so that a cross section of the slot channel (3) is trapezoidal in shape.

8. The clamping slot for wiring in the building according to claim 6, wherein
the two side walls (2) extend along a curve line in a bent manner, so that the cross section of each side wall (2) is arc-shaped, and a radius of an inner wall surface of each side wall (2) is larger than that of an inscribed circle of the slot channel (3).

9. The clamping slot for wiring in the building according to claim 1, wherein
a bottom surface of the base plate (1) is flat, and the base plate (1) is fixedly provided with a colloid (6), so that the base plate (1) is pasted on the wall surface through the colloid (6).

10. A method for using the clamping slot according to claim 1, comprising the following steps:
adopting a first auxiliary tool (200) to press the clamping slot (100), fixing the clamping slot (100) on the wall surface, and at the same time, making the bendable portion (11) correspondingly located at a corner of the wall surface; and
placing the optical cable (5) in the opening (4), and adopting the first auxiliary tool (200) to press the optical cable (5) so as to make the optical cable (5) enter the slot channel (3).

11. The method for using the clamping slot according to claim 10, wherein
the first auxiliary tool (200) comprises a handle (201) and a roller (202) mounted on one end of the handle (201) by means of a pin shaft, the roller (202) is provided with a groove (203) configured to receive the clamping slot (100), and the size of the groove (203) is matched with that of the clamping slot (100).

12. The method for using the clamping slot according to claim 10, wherein before the steps of adopting the first auxiliary tool (200) to press the clamping slot (100), fixing the clamping slot (100) on the wall surface, and at the same time, making the bendable portion (11) correspondingly located at the corner of the wall surface, further comprising the following step:
adopting a second auxiliary tool (300) to cut on the clamping slot (100) to form the gaps (22).

13. The method for using the clamping slot according to claim 12, wherein the second auxiliary tool (300) comprises:
a first operating arm (301) and a second operating arm (302) hinged by means of a pin shaft, the first operating arm (301) is fixedly provided with a positioning seat (303), the second operating arm (302) is fixedly provided with cutter knives (305) arranged at intervals corresponding to the positioning seat (303), and the cutter knives (305) are configured to cut the gaps (22).

14. The method for using the clamping slot according to claim 13, wherein the positioning seat (303) is provided with a positioning portion (304) corresponding to each cutter knife (305), and the step of adopting the second auxiliary tool (300) to cut on the clamping slot (100) to form the gaps (22) comprises the following steps:
placing the clamping slot (100) upside down on the positioning seat (303) so as to make the slot channel (3) clamped on the positioning portion (304), driving the first operating arm (301) and the second operating arm (302) to move toward each other, and driving the cutter knives (305) to move toward the clamping slot (100) so as to make the cutter knives (305) to cut on the clamping slot (100) to form the gaps (22).

15. The method for using the clamping slot according to claim 13, wherein
the positioning seat (303) is provided with a guide groove (307), the second operating arm (302) is correspondingly provided with a guide post (308) matched with the guide groove (307), and a spring (309) is sleeved outside the guide post (308), and an outer diameter of the spring (309) is larger than an inner diameter of the guide groove (307).
